# EUROPEAN PATENT APPLICATION

(11) **EP 2 315 137 A1**
(43) Date of publication of application: **27.04.2011**
(21) Application number: 09013462.8
(22) Date of filing: 26.10.2009
(51) Int. Cl.: G06F 17/30

(54) **Searching of databases**

(71) Applicant: DAD Solutions Limited, Bagshot Surrey GU19 5AH (GB)
(72) Inventor: Corner, Christopher Andrew, Andover Hants SP10 2UA (GB)
(74) Representative: Downing, Michael Philip

(57) **Abstract**

An intelligent search functionality is described, in which the search query is optimised through the use of semantic information provided by the elements of an index, or in which context-appropriate metadata tags are presented with search results in order of their potential utility in refining those search results. The step of pre-processing the search input by presenting the user with additional search options is based on metadata associated with various file types. Thus, potential additional selections are offered which are context-aware. The selection of the additional search terms allows the search data entered by the user to be optimised, providing much more focussed and accurate results when compared with a simple keyword search.

## Description

### FIELD OF THE INVENTION

The present Invention relates to the searching of databases.

### BACKGROUND ART

As the use and manipulation of digital data becomes steadily more pervasive, the need to provide an effective search functionality for that data becomes steadily more important. This is particularly (but not exclusively) so in the home environment, where multiple non-IT-trained users may have access to the same storage volume or volumes, and tend to add files to the volume with little or no regard to a formal data structure that might aid later retrieval.

Our earlier application no: EP09251937.0, filed on 5 August 2009, describes a system for cataloguing the files that may be held in such an environment across multiple devices and formats. The greatly aids the above problem by creating a single searchable database (the "Index") of files which can be accessed by all users having the appropriate security rights. However, it is still necessary to search the database in order to locate a specific file.

### SUMMARY OF THE INVENTION

The present invention seeks to provide an intelligent search functionality in which the search query can be optimised through the semantic information provided by the elements of the Index (i.e. pre-processing). In another aspect of the invention, context appropriate metadata tags are presented with the search results In order of their potential utility In refining those search results.

The step of pre-processing the search input by presenting the user with additional search options is based on the metadata associated with various file types. Thus, potential additional selections are offered which are context-aware. The selection of the additional search terms allows the search data entered by the user to be optimised, providing much more focussed and accurate results when compared with a simple keyword search.

For example, if searching for image files, the user is presented with additional search terms appropriate to the context, such as Camera Type, Lens Model, or the like. These can be pre-populated with data from the Index. Selection of these additional terms will allow the search to be much more accurately focussed.

The post-processing aspect of the invention will present the search results to the user along with populated metadata, presented in order of utility of refinement in the context of the search results. Thus, for a specific file type metadata will be presented (if populated in the Index file) in a specific order of utility. The utility is determined through a function of tags populated with different data items. Thus, for Image files (for example), if most or all files are tagged with the same Lens Type, then it is apparent that the "Lens Type" metadata element is not a good discriminator, and is therefore presented low on the scale of utility - i.e. presented at the lower end of the list. The User can then select the metadata tags that are most useful for refining the search, and the search can then be re-run including those metadata items.

### DETAILED DESCRIPTION OF THE EMBODIMENTS

An embodiment of the present invention will now be described by way of example.

This first step covers the manner in which the web service can learn from common metadata settings and searches. For the purposes of the example, consider the populated Index data set (for a limited number of Image files) presented in Sample 1:

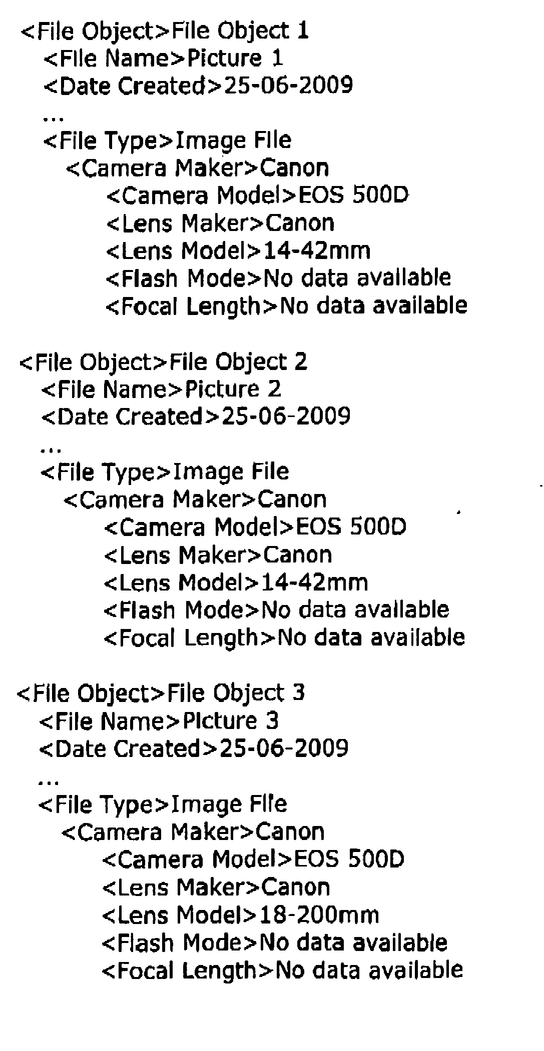

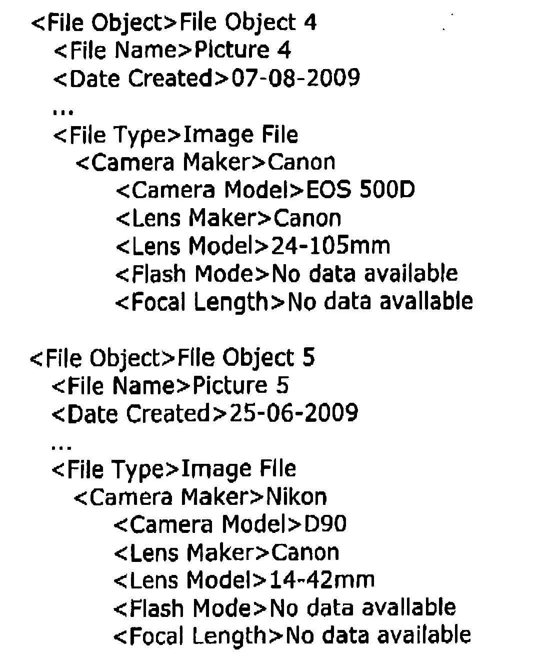

### Sample 1 - Example Populated Index Data Set

This is a set of metadata having a defined structure, and provides a description of file objects such as Image files and Audio files through populated metadata tags relevant only to the file type.

In order to allow systems access to the data of other systems, the Index data sets (or sub-sets thereof) will be shared between machines. On a family network this sharing is done directly system to system. On the wider network, over the Internet, this is done via a web service.

This sharing of Index data sets via the web service provides an opportunity for the web service to record the metadata populated in the Index data sets and to analyse that metadata. The web service maintains an anonymous copy of each Index data set (which therefore cannot be related back to a specific user/system), in order to be able to inform searching of the Internet or the like. The web service analyses the metadata populating each of the tags and maintain records of the metadata tags commonly associated with file types and the most common data which populates those tags. The most common data populating the tags can be calculated by a simple count of the number of times that data has populated the specific metadata tag.

The system therefore records the metadata tag, the file type to which it refers, the data items that have populated that tag, and the number of times that the data item has populated that tag.

An example of the web service record for Image file types is illustrated in Sample 2. This record would be the result of the web service analysis of a large number of Index data sets (such as that shown in Sample 1) as they are shared through the web service. The numbers in parentheses are the number of times that specific data item has been counted.
<File Type>Image
<Camera Maker>Nikon (993456), Canon (12345), Sony (988776), Olympus (5415), ... , ,...
<Camera Model>EOS 500D (897756), EOS 450D (34378), Alpha a330 (7891), D5000 (23156), D90 (112), E-420 (45378), ... , ...
<Lens Maker>Nlkon (879087), Canon (764312), Sony (665352), Olympus (562328), Tamron (472890), Zeiss (328191), ... , ...
<Lens Model>14-42mm (901808), 24-105mm (812134), 18-200mm (78008), 18-55mm (650123), ... , ...
<Flash Mode>TTL (767615), TTL-BL (651324), No Flash Fired (541010), ... ,
<Focal Length>16.22mm (908999), 28.81mm (102930), ... , ...

### Sample 2 - Example Web Service Records of Metadata for "Image" File Type

When searching the internet, the records of the web searches (e.g. search for File Type = Image, Camera Model = EOS 500D, and Camera Maker = Canon) are passed to the web service, where they are analysed in an identical manner to the Index data sets described above. The most common search data associated with each metadata tag is calculated by a simple count of the number of times that data has populated the specific metadata tag in the search requests. That value is added to the web service records. In the example this would result in an update to the data values and data items in Sample 2.

In the second step, these web service records are then made available to individual system instances as updates from the web service to the system records. They are used by the system instances to inform the context sensitive searching of internet functionality; the search query can then be optimised by use of the semantic information provided by the elements of the Index. The context-appropriate metadata tags can also be presented with the search results, in order of their potential utility in refining those search results.

It will of course be understood that many variations may be made to the above-described embodiment without departing from the scope of the present invention.

## Claims

1. A search functionality for a database holding details of a plurality of items and a plurality of metadata elements, at least a proportion of the metadata elements being populated with content in respect of a plurality of the items, comprising
a search interface able to accept search parameters and display details of the items matching the search parameters;
the search interface being adapted to display additional potential search parameters selected from the metadata elements of items meeting the search parameters currently provided.

2. A search functionality according to claim 1 in which the additional potential search parameters are displayed prior to an initiation of a search by a user.

3. A search functionality according to claim 1 or claim 2 in which the additional potential search parameters are displayed subsequent to an initiation of a search by a user.

4. A search functionality according to any one of the preceding claims in which the additional potential search parameters are displayed in a ranked order according to a potential utility scale.

5. A search functionality according to claim 4 in which the potential utility scale reflects the number of items having different content for the metadata element concerned.
